# EUROPÄISCHE PATENTANMELDUNG

(11) **EP 2 554 890 A2**
(43) Veröffentlichungstag der Anmeldung: **06.02.2013**
(21) Anmeldenummer: 12005582.7
(22) Anmeldetag: 01.08.2012
(51) Int. Cl.: F16L 23/00, F24F 13/02, B64D 13/00

(54) **Verbindungssystem für längliche Hohlkörper und Verfahren zur Verbindung länglicher Hohlkörper**

(30) Priorität: 04.08.2011 DE 102011109423; 08.10.2011 DE 102011115447
(71) Anmelder: Diehl Aircabin GmbH, 88471 Laupheim (DE)
(72) Erfinder: Mayer, Manuel, 89584 Ehingen (DE); Huber, Alfred, 88437 Maselheim (DE); Höfle Roland, 88045 Friedrichshafen (DE)
(74) Vertreter: Diehl Patentabteilung

(57) **Zusammenfassung**

Die Erfindung betrifft ein Verbindungssystem für längliche Hohlkörper (22), insbesondere für Rohre oder für Flachkanäle in einem Flugzeug, das ein erstes Verbindungselement (2) und ein zweites Verbindungselement (3) umfasst, die auf einander zugewandten Enden auf länglichen Hohlkörpern (22) anbringbar sind, wobei das erste Verbindungselement (2) wenigstens ein in einer radialen Richtung angeordnetes hervorstehendes Element (6) aufweist, das im Falle eines Zusammenschiebens in eine korrespondierende Ausnehmung (7) des zweiten Verbindungselements (3) einführbar ist, wobei zwischen dem ersten Verbindungselement (2) und dem zweiten Verbindungselement (3) ein Verriegelungsmittel (12) angeordnet ist, das eine lösbare Verbindung zwischen dem ersten Verbindungselement (2) und dem zweiten Verbindungselement (3) schafft. Des Weiteren betrifft die Erfindung ein Verfahren zur Verbindung zweier länglicher Hohlkörper, insbesondere für Rohre oder für Flachkanäle in einem Flugzeug.

## Beschreibung

### GEBIET DER ERFINDUNG

Die Erfindung bezieht sich auf ein Verbindungssystem für längliche Hohlkörper, insbesondere für Rohre oder für Flachkanäle in einem Flugzeug. Darüber hinaus betrifft die Erfindung ein Verfahren zur Verbindung länglicher Hohlkörper, insbesondere für Rohre oder für Flachkanäle in einem Flugzeug.

### HINTERGRUND DER ERFINDUNG

Kreisförmige Rohre werden im Kabineninnerraum von Flugzeugen in vielfältiger Weise eingesetzt. Beispielsweise werden Luftzuführungen für Klimaanlagen im Kabineninnerraum häufig durch Rohrstücke mit kleiner Teilung gebildet, die oftmals ohne eine Möglichkeit für entsprechende Halterpositionen zusammengesetzt werden müssen. Dies erfordert einen zuverlässigen Verbindungsmechanismus, der sowohl leicht sein muss als auch unter beengten Platzverhältnissen sicher bedienbar ist.

Eine Möglichkeit zur Realisierung eines Verbindungsmechanismus ist durch die Verwendung von V-förmigen Flanschen gegeben, die jeweils auf die Außenflächen von kreisrunden Rohrenden aufgeklebt und anschließend mit einer Spannschelle mit V-förmiger Innengeometrie verspannt werden, wodurch eine innen liegende Dichtung komprimiert wird und die Rohre fest miteinander verbunden werden.

### ZUSAMMENFASSUNG DER ERFINDUNG

Es ist Aufgabe der Erfindung, ein Verbindungssystem für längliche Hohlkörper der eingangs genannten Art zu schaffen beziehungsweise ein Verfahren zur Verbindung länglicher Hohlkörper anzugeben, die Hohlkörper mit einer möglichst flexibel zu gestaltenden Querschnittsfläche verbinden können und einen wenig Platz erfordernden Aufbau aufweisen.

Diese Aufgabe wird in einem ersten Aspekt durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Der erfindungsgemäße Verbindungssystem für längliche Hohlkörper, insbesondere für Rohre oder für Flachkanäle in einem Flugzeug, umfasst ein erstes Verbindungselement und ein zweites Verbindungselement, die auf einander zugewandten Enden auf länglichen Hohlkörpern anbringbar sind. Das erste Verbindungselement weist wenigstens ein in einer radialen Richtung angeordnetes hervorstehendes Element auf, das im Falle eines Zusammenschiebens in eine korrespondierende Ausnehmung des zweiten Verbindungselements einführbar ist. Zwischen dem ersten Verbindungselement und dem zweiten Verbindungselement ein Verriegelungsmittel ist angeordnet, das eine lösbare Verbindung zwischen dem ersten Verbindungselement und dem zweiten Verbindungselement schafft.

Das erfindungsgemäße Verbindungssystem verringert den Platzbedarf beim Ein-und Ausbau der länglichen Hohlkörper, indem keine Schellen oder Flansche vorgesehen sind. Dadurch wird eine seitliche Zusammenführung der beiden länglichen Hohlkörper ermöglicht, die nur einen geringen Platzbedarf aufweist, da beispielsweise keine Elemente im eingefügten Zustand um die länglichen Hohlkörper herum geführt und angelegt werden müssen. Des Weiteren können die beiden Hohlkörper nach dem Einbau nicht mehr gegen einander verdreht werden, da auf rotationssymmetrische Bauteile wie Schellen oder Klammern verzichtet wird. Ferner kann das Verbindungssystem mit sehr geringem Gewicht hergestellt werden, so dass beispielsweise bei Verwendung für Rohre in einem Flugzeug keine störende Verschiebung der Eigenfrequenzen zu niederen Frequenzen hin auftreten kann.

Gemäß einer Ausgestaltung der Erfindung deckt das hervorstehende Element den Außenumfang des ersten Verbindungselements teilweise, vorzugsweise halbseitig, ab.

Demgemäß werden die korrespondierenden Elemente in Form von Halbschalen ausgeführt, so dass sich die Aussparung und das hervorstehende Element leicht ineinander führen lassen.

Gemäß einer weiteren Ausgestaltung der Erfindung ist vorgesehen, dass das erste Verbindungselement an seinem Außenrand außerhalb des hervorstehenden Elements eine weitere Ausnehmung aufweist, in die ein korrespondierendes weiteres vorstehendes Element auf dem zweiten Verbindungselement einführbar ist.

Demgemäß entsteht eine Verbindung zwischen dem ersten und dem zweiten Verbindungselement über nahezu den kompletten Umfang.

Gemäß einer weiteren Ausgestaltung der Erfindung sind das hervorstehende Element und die Ausnehmung so geformt, dass im Falle des Zusammenschiebens ein axialer Versatz in Richtung des Hohlkörpers auftritt.

Auf diese Weise wird Reibung zwischen dem ersten Verbindungselement und dem zweiten Verbindungselement reduziert.

Gemäß einer weiteren Ausgestaltung der Erfindung ist auf dem zweiten Verbindungselement eine Dichtung angebracht, deren Dichtfläche dem ersten Verbindungselement zugewandt ist.

Des Weiteren kann die Dichtung in einer hinterschnittenen Öffnung in dem zweiten Verbindungselement eingeklemmt sein.

Die Dichtung kann als extrudierter Hohlkörper, vorzugsweise aus Silikon, gebildet sein.

Die Dichtung ermöglicht eine Abdichtung zwischen den beiden länglichen Hohlkörpern bei der Montage. Es wird sichergestellt, dass die Dichtung während der Montage nicht herausfallen kann. Weiterhin wird die Dichtung erst in der geschlossenen Position des Verriegelungsmittels vollständig zusammengedrückt.

Gemäß einer weiteren Ausgestaltung der Erfindung ist vorgesehen, dass das Verriegelungsmittel ein Viertel-Drehverschluss ist, der auf dem zweiten Verbindungselement angeordnet ist.

Ein Viertel-Drehverschluss, auch Dzus-Verschluss genannt, ist ein im Flugzeugbau bewährter Verschluss, der ohne Werkzeug beispielsweise über einen entsprechenden Flügelkopf bedienbar ist. Dabei kann der Verschluss in Ausbaurichtung angeordnet sein, um die Bedienung während der Montage zu erleichtern.

In einer weiteren Ausgestaltung der Erfindung greift der Viertel-Drehverschluss in einen länglichen Körper, vorzugsweise einen Draht, der in einem Außenbereich des ersten Verbindungselements angeordnet ist.

Viertel-Drehverschlüsse weisen auf ihrer Unterseite hakenförmige Elemente auf, die durch eine Drehung in die Drahtschlinge greifen können, um eine sichere Verbindung herzustellen. Eine Kegelfeder sorgt dabei für eine festlegbare Rückholkraft, so dass bei unvollständigem Eingreifen des Verschlusses, dieser in die geöffnete Position springt. Dadurch wird einem Benutzer das nicht erfolgte Verschließen direkt angezeigt.

Die länglichen Hohlkörper können einen kreisförmigen oder ellipsenförmigen Querschnitt aufweisen oder als Flachkanal ausgeführt sein.

Durch den Verzicht auf rotationssymmetrische Bauteile wie Schellen oder Flansche kann das Verbindungssystem für beliebige Querschnitte der länglichen Hohlkörper verwendet werden. Das Verriegelungsmittel kann dabei sowohl auf der kürzern als auch auf der längeren Seite der länglichen Hohlkörper angeordnet sein.

Das erste Verbindungselement und das zweite Verbindungselement mittels eines Spritzgussverfahrens herstellbar sind.

Auf diese Weise lässt sich ein Verbindungssystem schaffen, das ein geringes gewicht aufweist und darüber hinaus auch kostengünstig in großer Stückzahl herstellbar ist.

In einer weiteren Ausgestaltung der Erfindung sind das erste Verbindungselement und das zweite Verbindungselement mittels eines Klebers mit den länglichen Hohlkörpern verbunden.

Diese Vorgehensweise ermöglicht eine leichte Montage der Verbindungselemente mit den länglichen Hohlkörpern.

Des Weiteren wird eine Flugzeugklimaanlage mit Rohren oder Flachkanälen, die wenigstens teilweise mit einem erfindungsgemäßen Verbindungssystem versehen sind, angegeben.

Ferner wird ein Flugzeug mit einer Klimaanlage, die Rohre oder Flachkanäle aufweist, die wenigstens teilweise mit einem erfindungsgemäßen Verbindungssystem versehen sind, angegeben.

Ein Verfahren zur Verbindung zweier länglicher Hohlkörper umfasst das Bereitstellen eines ersten Verbindungselements, das ein in einer radialen Richtung angeordnetes hervorstehendes Element aufweist. Es wird ein zweites Verbindungselement bereitgestellt, das eine zum hervorstehenden Element korrespondierende Ausnehmung aufweist. Nach dem Anbringen des ersten Verbindungselements und des zweiten Verbindungselements auf einander zugewandten Enden von länglichen Hohlkörpern, erfolgt ein Zusammenschieben des ersten und des zweiten Verbindungselements in einer radialen Richtung. Zwischen dem ersten Verbindungselement und dem zweiten Verbindungselement ist ein Verriegelungsmittel angeordnet. Das Verriegelungsmittel wird dann in einem letzten Schritt geschlossen, so dass eine lösbare Verbindung zwischen dem ersten Verbindungselement und dem zweiten Verbindungselement geschaffen wird.

### KURZE BESCHREIBUNG DER ZEICHNUNGEN

Nachfolgend werden einige Ausführungsbeispiele anhand der Zeichnungen näher erläutert. Es zeigen:
Fig. 1: eine schematische Darstellung eines erfindungsgemäßen Verbindungssystems,
Fig. 2: eine Ansicht eines erfindungsgemäßen Verbindungssystems vor dem Zusammenführen,
Fig. 3: eine Ansicht eines erfindungsgemäßen Verbindungssystems nach dem Zusammenführen,
Fig. 4: eine Detailansicht eines Bereichs aus Figur 3,
Fig. 5: eine weitere Detailansicht eines Bereichs aus Figur 3,
Fig. 6 eine weitere Detailansicht eines Bereichs aus Figur 1,
Fig. 7: eine Querschnittsansicht des Verbindungssystems vor dem Verschließen,
Fig. 8: eine Querschnittsansicht des Verbindungssystems nach dem Verschließen,
Fig. 9: eine weitere Querschnittsansicht des Verbindungssystems mit einer Dichtung, und
Fig. 10: eine Querschnittsansicht durch längliche Hohlkörper.

### DETAILLIERTE BESCHREIBUNG BEISPIELHAFTER AUSFÜHRUNGSFORMEN

In den Figuren sind gleiche oder funktional gleichwirkende Bauteile mit den gleichen Bezugszeichen versehen.

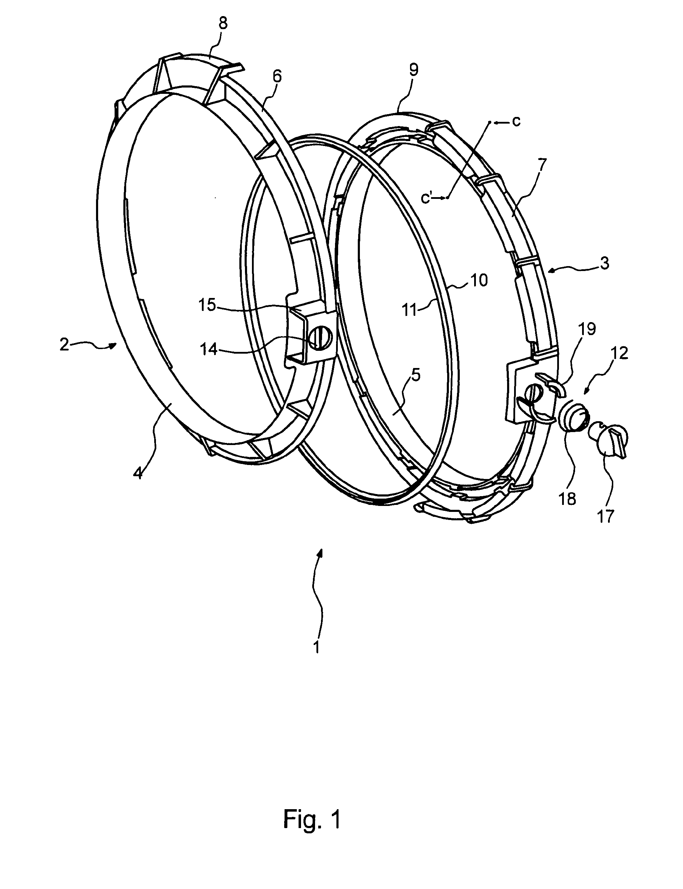

Unter Bezugnahme auf Fig. 1 wird im Folgenden eine erste Ausführungsform der Erfindung erläutert. Fig. 1 zeigt ein Verbindungssystem 1, das als Verbindung zweier länglicher Hohlkörper dient. Als längliche Hohlkörper (nicht in Fig. 1 gezeigt) können beispielsweise Rohre oder Flachkanäle für ein Belüftungssystem oder Klimaanlage in einem Flugzeug eingesetzt werden.

Das Verbindungssystem 1 umfasst ein erstes Verbindungselement 2 und ein zweites Verbindungselement 3. Das erste Verbindungselement 2 und das zweite Verbindungselement 3 sind in Form eines Ringes ausgebildet und können auf einander zugewandten Enden auf den länglichen Hohlkörpern angebracht werden, um eine Verbindung zwischen den länglichen Hohlkörpern zu schaffen. Das erste Verbindungselement 2 weist eine erste Innenfläche 4 auf, die in ihrer Form derjenigen des länglichen Hohlkörpers entspricht. Ferner weist das zweite Verbindungselement 3 eine zweite Innenfläche 4 auf, die in ihrer Form der Geometrie ebenfalls des länglichen Hohlkörpers entspricht. Die Innenfläche 4 und die Innenfläche 5 können mittels eines Klebers mit den Enden der länglichen Hohlkörper verbunden sein.

Das erste Verbindungselement 2 weist ein in einer radialen Richtung angeordnetes hervorstehendes Element 6 auf, das in eine korrespondierende Ausnehmung 7 des zweiten Verbindungselements 3 einführbar ist.

In der in Fig. 1 gezeigten Ausführungsform deckt das hervorstehende Element 6 den Außenumfang des ersten Verbindungselements 2 halbseitig ab. Das erste Verbindungselement 2 an seinem Außenrand außerhalb des hervorstehenden Elements 6 eine weitere Ausnehmung 8 aufweist, in die ein korrespondierendes weiteres vorstehendes Element 9 auf dem zweiten Verbindungselement 3 einführbar ist. Demgemäß werden die korrespondierenden Bauteile aus hervorstehendem Element 6 und Ausnehmung 7 beziehungsweise aus weiterem hervorstehenden Element 9 und weitere Ausnehmung 8 in Form von Halbschalen ausgeführt, so dass sich diese leicht ineinander führen lassen und eine Verbindung zwischen dem ersten Verbindungselement 2 und dem zweiten Verbindungselement 3 über nahezu den kompletten Umfang entsteht.

Auf dem zweiten Verbindungselement 3 ist eine Dichtung 10 angebracht, deren Dichtfläche 11 dem ersten Verbindungselement 2 zugewandt ist, so dass im zusammengesetzten Zustand die Verbindung zwischen dem ersten Verbindungselement 2 und dem zweiten Verbindungselement 3 abgedichtet wird.

Zwischen dem ersten Verbindungselement 2 und dem zweiten Verbindungselement 3 ein Verriegelungsmittel 12 angeordnet ist, das eine lösbare Verbindung zwischen dem ersten Verbindungselement 2 und dem zweiten Verbindungselement 3 schafft. Mögliche Ausführungsformen für das Verriegelungsmittel 12 werden weiter unten erläutert. Es ist vorgesehen, dass die Dichtung 10 erst in der geschlossenen Position des Verriegelungsmittels 12 vollständig zusammengedrückt wird.

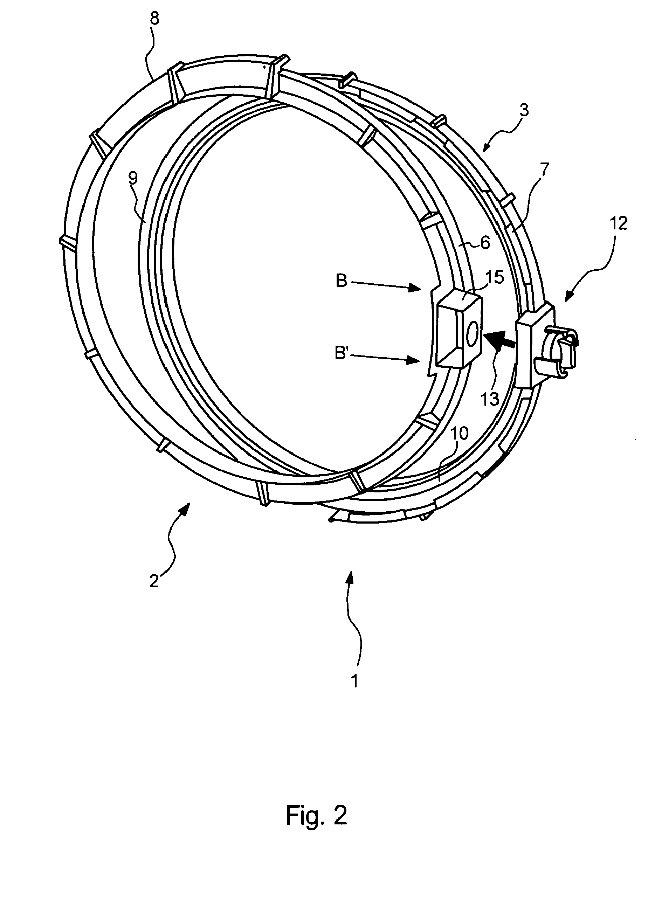

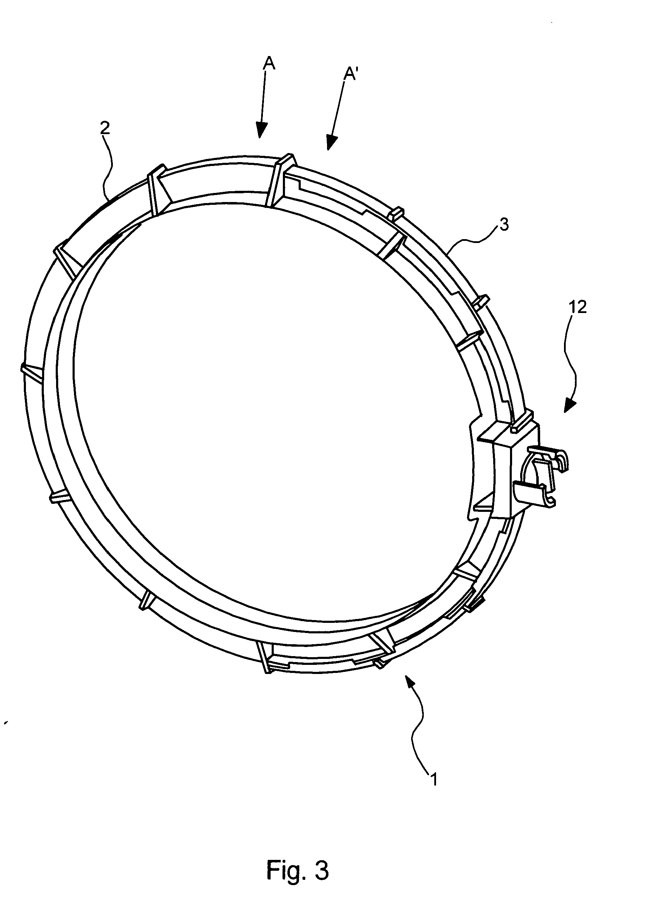

Das Zusammensetzen des ersten Verbindungselements 2 und des zweiten Verbindungselements 3 wird nachfolgend unter Bezugnahme auf Fig. 2 und Fig. 3 näher erläutert.

Diese zeigen jeweils eine Ansicht des Verbindungssystems 1 vor und nach dem Zusammenführen. Das Verbindungssystem 1 verringert den Platzbedarf beim Ein- und Ausbau der länglichen Hohlkörper, da keine Schellen oder Flansche vorgesehen sind. Dadurch wird ein seitliches Zusammenführen der beiden länglichen Hohlkörper ermöglicht, wie in Fig. 2 durch den Pfeil 13 angedeutet ist.

Das seitliche Zusammenführen erfolgt dabei in einer radialen Richtung, d.h. quer zur Längsachse der länglichen Hohlkörper. Diese Montageart des Verbindungssystems 1 benötigt nur einen geringen Platzbedarf, da beispielsweise keine Montagezubehör im eingefügten Zustand um die länglichen Hohlkörper herum geführt und angelegt werden müssen. Des Weiteren können die beiden Hohlkörper nach dem Einbau nicht mehr gegen einander verdreht werden, da auf kreisförmige Bauteile wie Schellen oder Klammern verzichtet wird. Wie Fig. 3 zu entnehmen ist, benötigt das flanschartige Verbindungssystem 1 im fertig zusammengefügten Zustand nur wenig Platz und kann auch mit einem geringen Gewicht mittels eines Spritzgussverfahrens hergestellt werden, so dass beispielsweise bei Verwendung für Rohre in einem Flugzeug keine störende Verschiebung der Eigenfrequenzen zu niederen Frequenzen hin auftreten kann.

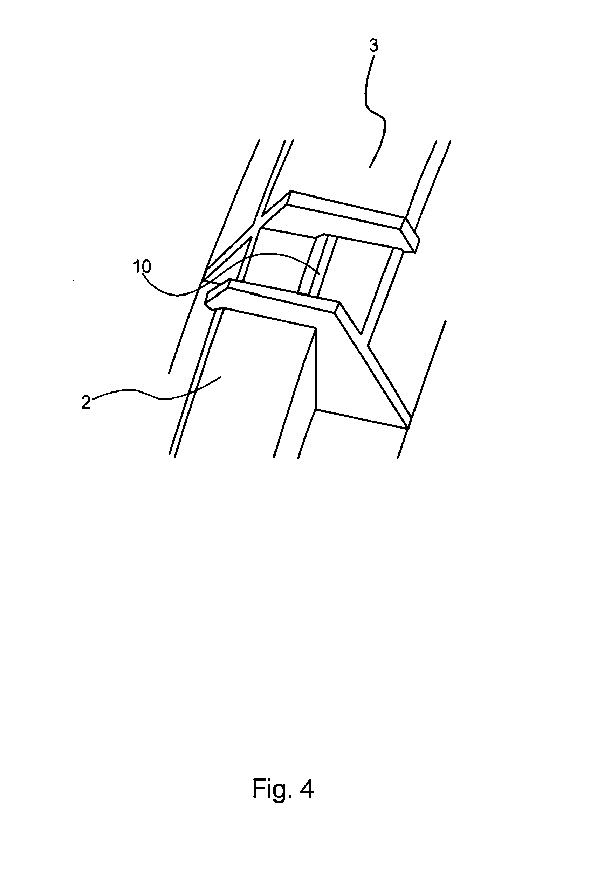

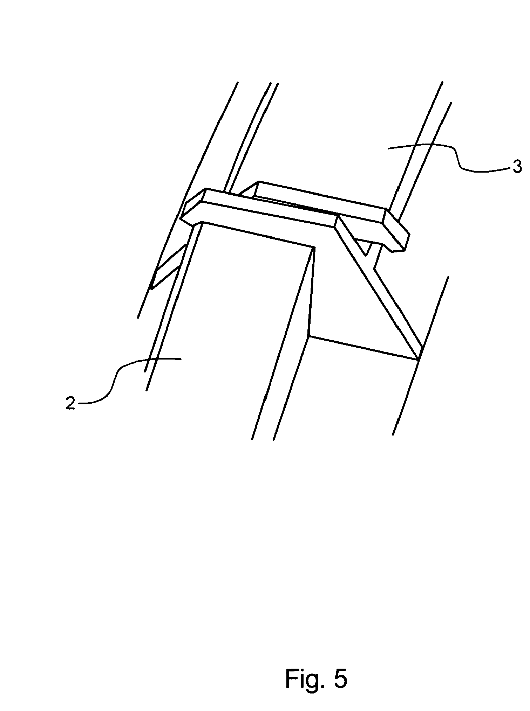

Unter Bezugnahme auf Fig. 4 und 5 wird das Zusammenführen nochmals anhand einer Detailansicht erläutert. Dabei ist eine Detailansicht von außen in radialer Richtung auf denjenigen Bereich gezeigt, in dem das erste Verbindungselement 2 und das zweite Verbindungselement 3 zusammenstoßen. Dieser Bereich ist in Fig. 3 mit den Pfeilen A und A' markiert.

Zwischen dem ersten Verbindungselement 2 und dem zweiten Verbindungselement 3 ist die Dichtung 10 zu erkennen. Das hervorstehende Element 6 und die Ausnehmung 7 sind als Führungen so geformt, dass im Falle des Zusammenschiebens ein axialer Versatz in Richtung des Hohlkörpers auftritt. Auf diese Weise wird Reibung zwischen dem ersten Verbindungselement 2 und dem zweiten Verbindungselement 2 reduziert.

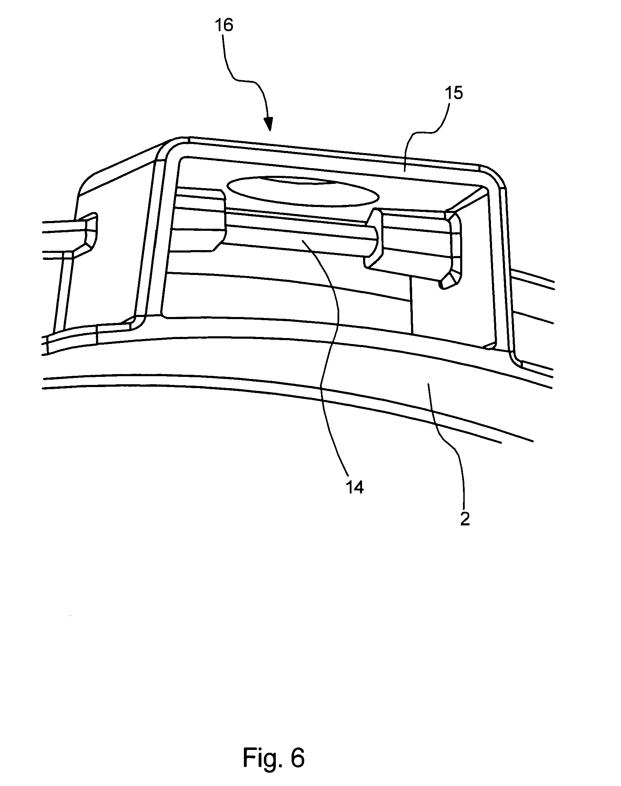

Unter Bezugnahme auf die Fig. 6 bis 8 wird nachfolgend eine Ausführungsform des Verriegelungsmittels 12 erläutert. Das Verriegelungsmittel 12 umfasst zwei Bestandteile. Der erste Bestandteil ist auf dem ersten Verbindungselement 2 angeordnet und umfasst einen Draht 14, der innerhalb eines U-förmigen Profils 15, das über dem Draht 14 eine Öffnung 16 aufweist, wie in Fig. 6 gezeigt ist. Fig. 6 zeigt eine Seitenansicht des ersten Verbindungselements 2, die in etwa dem in Fig. 2 gezeigten Bereich B-B' entspricht.

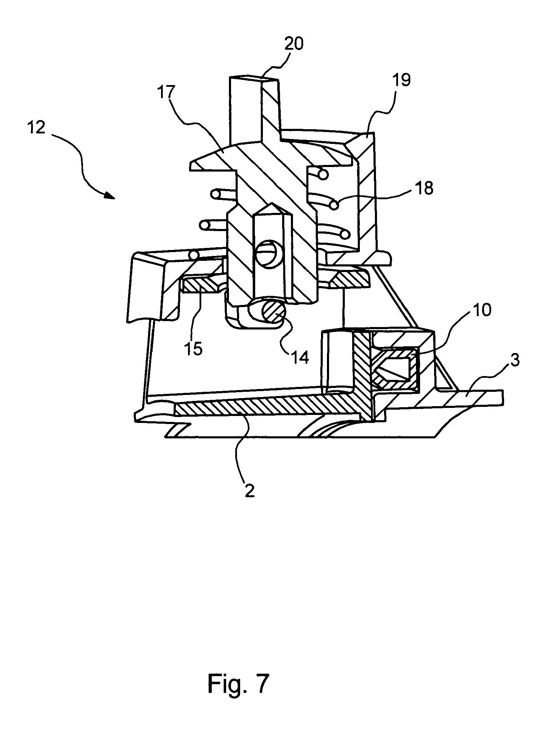

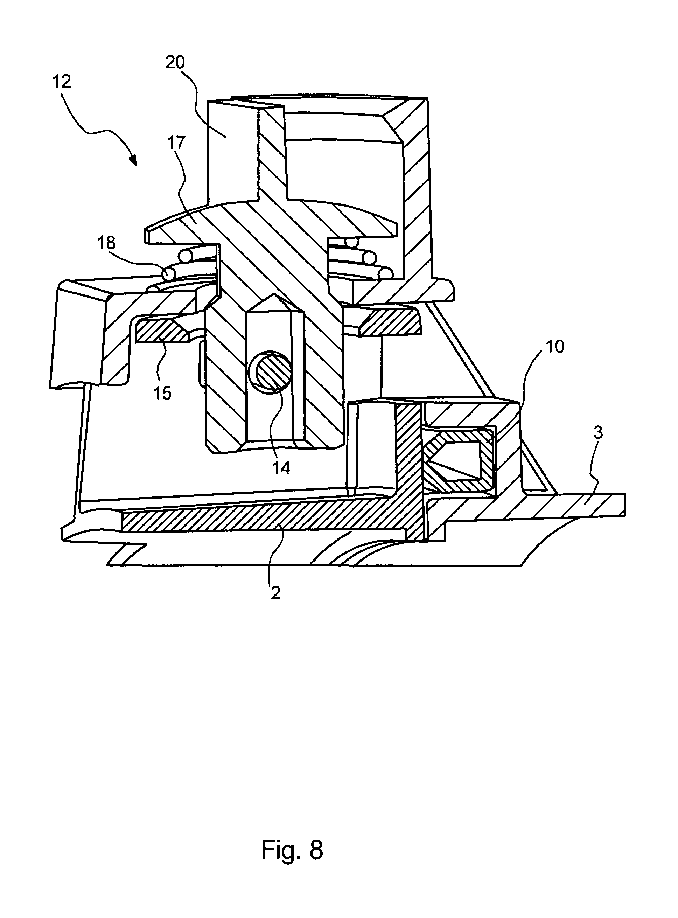

Der zweite Bestandteil ist auf dem zweiten Verbindungselement 3 angeordnet und umfasst einen Viertel-Drehverschluss 17 mit einer Kegelfeder 18, der oberhalb des U-förmigen Profils 15 in den Draht 14 eingreifen kann, wie in Fig. 7 und 8 gezeigt ist. Fig. 7 und 8 zeigen das Verriegelungsmittels 12 in einer Querschnittsansicht vor und nach dem Verriegeln entlang einer Schnittlinie C-C', wie in Fig. 1 angedeutet. Der Viertel-Drehverschluss 17 ist in einem Gehäuseteil 19 angeordnet und weist auf der Außenseite einen Flügelkopf 20 auf, so dass das Verriegelungsmittels 12 ohne Werkzeug über den Flügelkopf 20 bedienbar ist. Dabei kann der Viertel-Drehverschluss 17 in Ein- bzw. Ausbaurichtung angeordnet sein, um die Bedienung während der Montage zu erleichtern.

Der Viertel-Drehverschluss 17 weist auf der Unterseite ein hakenförmiges Element auf (nicht explizit in Fig. 7 oder 8 gezeigt), das durch eine Drehung in den Draht greifen kann, um eine sichere Verbindung herzustellen. Die Kegelfeder 18 sorgt dabei für eine Rückholkraft, so dass bei unvollständigem Eingreifen des Viertel-Drehverschluss 17, dieser in die geöffnete Position springt. Dadurch wird einem Benutzer das nicht erfolgte Verschließen direkt angezeigt.

Des Weiteren erzeugt die Kegelfeder 18 für ein Zusammenpressen des ersten Verbindungselements 2 und des zweiten Verbindungselements 3. Die so erzeugt Kraft kann beispielsweise 20 N betragen und lässt sich über die Wahl der Federkraft der Kegelfeder 18 festlegen.

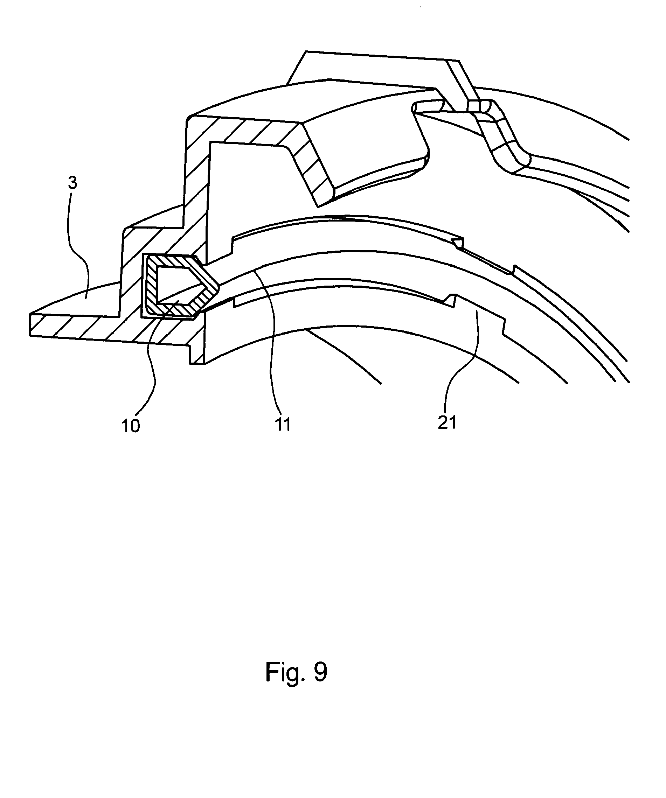

Unter Bezugnahme auf Fig. 9 wird nachfolgend der Einbau der Dichtung 10 in das zweite Verbindungselement 3 erläutert. Fig. 9 zeigt einen Querschnitt durch das zweite Verbindungselement 3. Wie in Fig. 9 zu erkennen ist, wird die Dichtung 10 in eine Gehäuseöffnung in das zweite Verbindungselement 3 eingeführt, so dass ihre Dichtfläche 11 nach außen gerichtet ist. Die Dichtung 10 kann als extrudierter Hohlkörper, vorzugsweise aus Silikon, gebildet sein. Die Dichtung 10 wird von Vorsprüngen 21 in der Gehäuseöffnung gehalten. Insgesamt ergibt sich durch die Vorsprünge 21 eine hinterschnittene Öffnung. Dadurch wird sichergestellt, dass die Dichtung 10 während der Montage nicht herausfallen kann. Weiterhin wird die Dichtung 10 erst in der geschlossenen Position des Verriegelungsmittels 12 vollständig zusammengedrückt.

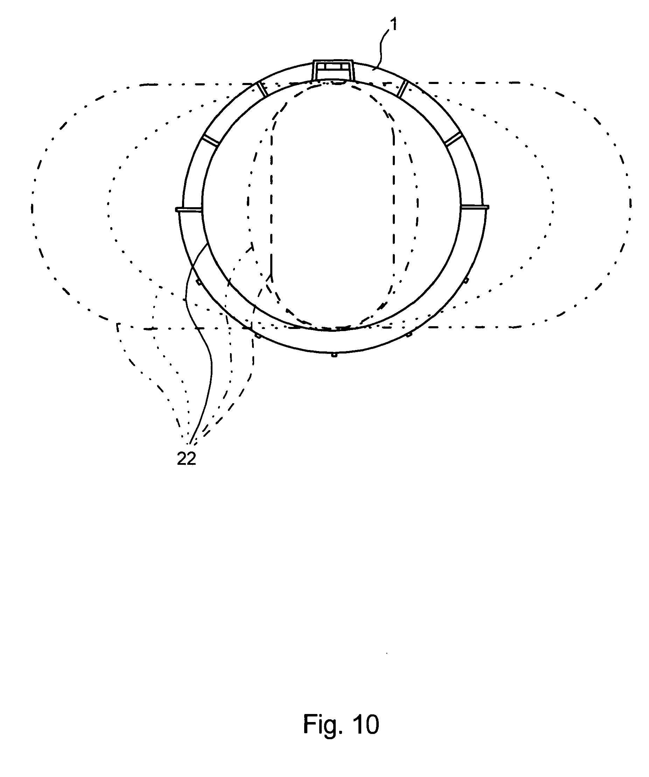

Das Verbindungssystem 1 eignet sich für eine Vielzahl von länglichen Hohlkörpern. Wie in Fig. 10 gezeigt ist, können die länglichen Hohlkörper 22 einen kreisförmigen oder ellipsenförmigen Querschnitt aufweisen. Es ist aber auch vorgesehen, diese als Flachkanal auszuführen. Das Verriegelungsmittel 12 kann dabei sowohl auf der kürzern als auch auf der längeren Seite der länglichen Hohlkörper 22 angeordnet sein.

Gemäß der Erfindung wird auch ein Verfahren zur Verbindung zweier länglicher Hohlkörper geschaffen. Das Verfahren umfasst in einem ersten Schritt das Bereitstellen eines ersten Verbindungselements 2, das ein in einer radialen Richtung angeordnetes hervorstehendes Element 6 aufweist. Es wird ein zweites Verbindungselement 3 bereitgestellt, das eine zum hervorstehenden Element 6 korrespondierende Ausnehmung 7 aufweist. Nach dem Anbringen des ersten Verbindungselements 2 und des zweiten Verbindungselements 3 auf einander zugewandten Enden von länglichen Hohlkörpern 22, erfolgt ein Zusammenschieben des ersten Verbindungselements 2 und des zweiten Verbindungselements 3 in einer radialen Richtung 13.

Zwischen dem ersten Verbindungselement 2 und dem zweiten Verbindungselement 3 ist ein Verriegelungsmittel 12 angeordnet. Das Verriegelungsmittel 12 wird dann in einem letzten Schritt geschlossen, so dass eine lösbare Verbindung zwischen dem ersten Verbindungselement 2 und dem zweiten Verbindungselement 3 geschaffen wird.

Die Erfindung lässt sich auf vorteilhafte Weise in einer Flugzeugkabine mit Rohren oder Flachkanälen einsetzten, die wenigstens teilweise mit einem Verbindungssystem 1 versehen sind. Des Weiteren kann die Erfindung auch in einem Flugzeug mit einer Klimaanlage eingesetzt werden, die Rohre oder Flachkanäle aufweist, die wenigstens teilweise mit einem Verbindungssystem 1 versehen sind.

### LISTE DER BEZUGSZEICHEN

- 1: Verbindungssystem
- 2: erstes Verbindungselement
- 3: zweites Verbindungselement
- 4: erste Innenfläche
- 5: zweite Innenfläche
- 6: hervorstehendes Element
- 7: Ausnehmung
- 8: weitere Ausnehmung
- 9: weiteres hervorstehendes Element
- 10: Dichtung
- 11: Dichtfläche
- 12: Verriegelungsmittel
- 13: radiale Richtung
- 14: Draht
- 15: U-förmiges Profil
- 16: Loch
- 17: Viertel-Drehverschluss
- 18: Kegelfeder
- 19: Gehäuseteil
- 20: Flügelkopf
- 21: Vorsprung
- 22: länglicher Hohlkörper

## Patentansprüche

1. Verbindungssystem für längliche Hohlkörper (22), insbesondere für Rohre oder für Flachkanäle in einem Flugzeug, umfassend ein erstes Verbindungselement (2) und ein zweites Verbindungselement (3), die auf einander zugewandten Enden auf länglichen Hohlkörpern (22) anbringbar sind, wobei das erste Verbindungselement (2) wenigstens ein in einer radialen Richtung angeordnetes hervorstehendes Element (6) aufweist, das im Falle eines Zusammenschiebens in eine korrespondierende Ausnehmung (7) des zweiten Verbindungselements (3) einführbar ist, wobei zwischen dem ersten Verbindungselement (2) und dem zweiten Verbindungselement (3) ein Verriegelungsmittel (12) angeordnet ist, das eine lösbare Verbindung zwischen dem ersten Verbindungselement (2) und dem zweiten Verbindungselement (3) schafft.

2. Verbindungssystem nach Anspruch 1, bei dem das hervorstehende Element (6) den Außenumfang des ersten Verbindungselements (2) teilweise, vorzugsweise halbseitig, abdeckt.

3. Verbindungssystem nach Anspruch 1 oder 2, bei dem das erste Verbindungselement (2) an seinem Außenrand außerhalb des hervorstehenden Elements (6) eine weitere Ausnehmung (8) aufweist, in die ein korrespondierendes weiteres vorstehendes Element (9) auf dem zweiten Verbindungselement (3) einführbar ist.

4. Verbindungssystem nach einem der Ansprüche 1 bis 3, bei dem das hervorstehende Element (6) und die Ausnehmung (7) so geformt sind, dass im Falle des Zusammenschiebens ein axialer Versatz in Richtung des Hohlkörpers (22) auftritt, um Reibung zwischen dem ersten Verbindungselement (2) und dem zweiten Verbindungselement (3) zu reduzieren.

5. Verbindungssystem nach einem der Ansprüche 1 bis 4, bei dem auf dem zweiten Verbindungselement (3) eine Dichtung (10) angebracht ist, deren Dichtfläche (11) dem ersten Verbindungselement (2) zugewandt ist.

6. Verbindungssystem nach Anspruch 5, bei dem die Dichtung in einer hinterschnittenen Öffnung in dem zweiten Verbindungselement (3) eingeklemmt ist.

7. Verbindungssystem nach einem der Ansprüche 5 oder 6, bei dem die Dichtung (10) als extrudierter Hohlkörper, vorzugsweise aus Silikon, gebildet ist.

8. Verbindungssystem nach einem der Ansprüche 1 bis 7, bei dem das Verriegelungsmittel (12) einen Viertel-Drehverschluss (17) umfasst, der auf dem zweiten Verbindungselement (3) angeordnet ist.

9. Verbindungssystem nach Anspruch 8, bei dem der Viertel-Drehverschluss (17) in einen länglichen Körper, vorzugsweise einen Draht (14), greift, der in einem Außenbereich des ersten Verbindungselements (2) angeordnet ist.

10. Verbindungssystem nach einem der Ansprüche 1 bis 9, bei dem die länglichen Hohlkörper (22) einen kreisförmigen oder ellipsenförmigen Querschnitt aufweisen oder als Flachkanal ausgeführt sind.

11. Verbindungssystem nach einem der Ansprüche 1 bis 10, bei dem das erste Verbindungselement (2) und das zweite Verbindungselement (3) mittels eines Spritzgussverfahrens herstellbar sind.

12. Verbindungssystem nach einem der Ansprüche 1 bis 10, bei dem das erste Verbindungselement (2) und das zweite Verbindungselement (3) mittels eines Klebers mit den länglichen Hohlkörpern (22) verbunden sind.

13. Flugzeugkabine mit Rohren oder Flachkanälen, die wenigstens teilweise mit einem Verbindungssystem (1) nach einem der Ansprüche 1 bis 12 versehen sind.

14. Flugzeug mit einer Klimaanlage, die Rohre oder Flachkanäle aufweist, die wenigstens teilweise mit einem Verbindungssystem (1) nach einem der Ansprüche 1 bis 12 versehen sind.

15. Verfahren zur Verbindung zweier länglicher Hohlkörper, insbesondere für Rohre oder für Flachkanäle in einem Flugzeug, umfassend:
- Bereitstellen eines ersten Verbindungselements (2), wobei das erste Verbindungselement (2) wenigstens ein in einer radialen Richtung angeordnetes hervorstehendes Element (6) aufweist;
- Bereitstellen eines zweiten Verbindungselements (3), wobei das zweite Verbindungselement (3) eine zum hervorstehenden Element korrespondierende Ausnehmung (7) aufweist;
- Anbringen des ersten Verbindungselements (2) und des zweiten Verbindungselements (3) auf einander zugewandten Enden von länglichen Hohlkörpern (22);
- Zusammenschieben des ersten Verbindungselements (2) und des zweiten Verbindungselements (3) in einer radialen Richtung, wobei zwischen dem ersten Verbindungselement (2) und dem zweiten Verbindungselement (3) ein Verriegelungsmittel (12) angeordnet ist, das eine lösbare Verbindung zwischen dem ersten Verbindungselement (2) und dem zweiten Verbindungselement schafft (3); und
- Schließen des Verriegelungsmittels (12).
